(19) Europäisches Patentamt
European Patent Office
Office européen des brevets

(11) **EP 4 782 965 A1**

(12) **EUROPEAN PATENT APPLICATION**
published in accordance with Art. 153(4) EPC

(43) Date of publication:
**29.07.2026 Bulletin 2026/31**

(21) Application number: **25766471.4**

(22) Date of filing: **02.09.2025**

(51) International Patent Classification (IPC):
**G06F 1/3203** (2019.01)   **G06F 1/26** (2006.01)

(52) Cooperative Patent Classification (CPC):
**G06F 1/30; H02M 1/0096; H02M 1/42**

(86) International application number:
**PCT/CN2025/118542**

(87) International publication number:
**WO 2026/091845 (07.05.2026 Gazette 2026/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.10.2024 CN 202411530391**

(71) Applicant: **Suzhou Metabrain Intelligent
Technology Co., Ltd.
Suzhou, Jiangsu 215000 (CN)**

(72) Inventor: **WU, Mingwei
Suzhou, Jiangsu 215000 (CN)**

(74) Representative: **Studio Torta S.p.A.
Via Viotti, 9
10121 Torino (IT)**

(54) **METHOD AND APPARATUS FOR ADJUSTING POWER-OFF HOLDUP TIME, AND MICROCONTROLLER UNIT AND STORAGE MEDIUM**

(57) Embodiments of the present disclosure provide a method and an apparatus for adjusting power interruption hold up time, and a microprocessor, a storage medium, an electronic device, and a computer program product. The method includes: in a case where it is determined that the power interruption hold up time of a server power supply unit (PSU) needs to be adjusted, acquiring input power consumption of the server PSU and a voltage difference between output voltages of a power supply power factor correction (PFC) stage circuit, wherein the input power consumption is detected by a first detection circuit, and the voltage difference is detected by a second detection circuit; determining, according to the input power consumption and the voltage difference, a correspondence between the power interruption hold up time of the server PSU and an output capacitance of the power supply PFC stage circuit; and adjusting, according to the correspondence, the output capacitance to adjust the power interruption hold up time of the server PSU to first power interruption hold up time.

In a case where it is determined that the power interruption hold up time of a server PSU needs to be adjusted, acquiringacquire input power consumption of the server PSU detected by a first detection circuit and a voltage difference between output voltages of a power supply power factor correction (PFC) stage circuit, wherein the input power consumption is detected by a first detection circuit, and the voltage difference is detected by a second detection circuit — S402

DeterminingDetermine, according to the input power consumption and the voltage difference, a correspondence between the power interruption hold up time of the server PSU and an output capacitance of the power supply PFC stage circuit — S404

AdjustingAdjust, according to the correspondence, the output capacitance based on the correspondence to adjust the power interruption hold up time of the server PSU to first power interruption hold up time — S406

Fig. 4

EP 4 782 965 A1

## Description

### Cross-Reference to Related Application

The present disclosure claims priority to Chinese Patent Application No. 202411530391.8, filed in the China Patent Office on October 30, 2024, and entitled "METHOD AND APPARATUS FOR ADJUSTING POWER INTERRUPTION HOLD UP TIME, AND MICROPROCESSOR AND STORAGE MEDIUM", which is incorporated herein by reference in its entirety.

### Technical Field

Embodiments of the present disclosure relate to the field of computers, and in particular to a method and an apparatus for adjusting power interruption hold up time, and a microprocessor, a storage medium, an electronic device, and a computer program product.

### Background

Ensuring power continuity during voltage interruptions or sags is key design challenges in a server server power supply unit (PSU) field. Solutions in the related art largely rely on hardware enhancements, such as introducing an additional boost circuit to maintain output voltage stability. However, such method tends to increase a physical size and manufacturing cost of a power supply and may adversely affect the overall power density.
At present, the related art lack an effective control method for optimizing power interruption hold up time of a server PSU without introducing additional hardware components, such as boost circuit.

### Summary

Embodiments of the present disclosure provide a method and an apparatus for adjusting power interruption hold up time, and a microprocessor, a storage medium, an electronic device, and a computer program product, to at least solve the problems in the related art that optimizing power interruption hold up time of a server requires additional hardware such as a boost circuit, resulting in increased power supply size, higher costs, and lower reliability of a server PSU.
According to one embodiment of the present disclosure, a method for adjusting power interruption hold up time is provided, the method is applied to a microprocessor, where a plurality of pairs of pins are configured on the microprocessor, and different pairs of pins are connected to detection circuits configured to perform different detection functions; and the method includes: in a case where it is determined that the power interruption hold up time of a server PSU needs to be adjusted, acquiring input power consumption of the server PSU and a voltage difference between output voltages of a power supply power factor correction (PFC) stage circuit, wherein the input power consumption is detected by a first detection circuit, and the voltage difference is detected by a second detection circuit; determining, according to the input power consumption and the voltage difference, a correspondence between the power interruption hold up time of the server PSU and an output capacitance of the power supply PFC stage circuit; and adjusting, according to the correspondence, the output capacitance to adjust the power interruption hold up time of the server PSU to first power interruption hold up time.
In an exemplary embodiment, acquiring the input power consumption of the server PSU detected by the first detection circuit includes: acquiring output power consumption of the server PSU, an output percentage of the server PSU, and power conversion efficiency of the server PSU, wherein the output power consumption, the output percentage, and the power conversion efficiency are all detected by the first detection circuit; and determining the input power consumption according to the output power consumption, the output percentage, and the power conversion efficiency.
In an exemplary embodiment, determining the input power consumption according to the output power consumption, the output percentage, and the power conversion efficiency includes: determining the input power consumption Pin according to the following formula (1): $P_{in} = P_{out} \times Load / \eta$, Formula (1), where $P_{out}$ is the output power consumption, Load is the output percentage, and $\eta$ is the power conversion efficiency.
In an exemplary embodiment, acquiring the voltage difference between output voltages of the power supply PFC stage circuit detected by the second detection circuit includes: acquiring a maximum voltage value output by the power supply PFC stage circuit, which is detected by the second detection circuit, and a minimum voltage value for maintaining the output of the server PSU; and determining a difference between the maximum voltage value and the minimum voltages as the voltage difference.
In an exemplary embodiment, determining, according to the input power consumption and the voltage difference, the correspondence between the power interruption hold up time of the server PSU and the output capacitance of the power supply PFC stage circuit includes: determining, according to the following formula (2), the correspondence between the power interruption hold up time T_holdup of the server PSU and the output capacitance C_bulk: $T\_holdup = C\_bulk \times \Delta V^2 / (2 \times Pin)$, Formula (2), where $\Delta V$ is the voltage difference, and Pin is the input power consumption.

In an exemplary embodiment, in a case where it is determined that the power interruption hold up time of the server PSU needs to be adjusted, the method further includes: determining a correspondence between the power interruption hold up time of the server PSU and an output voltage of the power supply PFC stage circuit; and adjusting, according to the correspondence between the power interruption hold up time of the server PSU and the output voltage of the power supply PFC stage circuit, the output voltage of the power supply PFC stage circuit to adjust the power interruption hold up time of the server PSU to a second power interruption hold up time.

In an exemplary embodiment, determining the correspondence between the power interruption hold up time of server PSU and the output voltage of the power supply PFC circuit includes: determining, according to the formula (2), the following formula (3), where the formula (3) indicates the correspondence between the power interruption hold up time T_holdup of the server PSU and the output voltage Pout of the power PFC circuit: $T\_holdup = C\_bulk \times (1 - C\_error) \times (Vbulk\_high^2 - Vbulk\_low^2) \times \eta / (2 \times Pout \times Load)$, Formula (3), where C_error is the error value of the output capacitance, Vbulk_high is the maximum voltage value output by the power supply PFC circuit, and Vbulk_low is the minimum voltage value for maintaining the output of the server PSU.

In an exemplary embodiment, the adjusting, according to the correspondence, the output voltage of the power supply PFC stage circuit to adjust the power interruption hold up time of the server PSU to the second power interruption hold up time includes: determining a target output voltage, where in a case where the output voltage of the power supply PFC stage circuit is the target output voltage, the power interruption hold up time of the server PSU maintains at the second power interruption hold up time; and adjusting a duty cycle according to a current input voltage of the power supply PFC stage circuit and a correspondence between the input voltage of the power supply PFC stage circuit and the output voltage of the power supply PFC stage circuit, so as to adjust the output voltage of the power supply PFC stage circuit to the target output voltage.

In an exemplary embodiment, before adjusting the duty cycle, the method further includes: determining according to the following formula (4), the correspondence between the input voltage Vin of the power supply PFC stage circuit and the output voltage Vout of the power supply PFC stage circuit: $Vout = Vin / (1-D)$, Formula (4); where D is the duty cycle.

In an exemplary embodiment, before adjusting the duty cycle, the method further includes: acquiring the current input voltage of the power supply PFC stage circuit detected by a third detection circuit.

In an exemplary embodiment, the third detection circuit includes a first resistor and a second resistor, where a first terminal of the first resistor is connected to an input voltage detection terminal of the power supply PFC stage circuit, a second terminal of the first resistor is connected to a target pin of the microprocessor and a first terminal of the second resistor, and a second terminal of the second resistor is grounded.

In an exemplary embodiment, the first resistor includes a first sub-resistor and a second sub-resistor, and the first sub-resistor and the second sub-resistor each have a resistance value of 499 K$\Omega$, and the second resistor has a resistance value of 5.57 K$\Omega$.

According to another embodiment of the present disclosure, an apparatus for adjusting power interruption hold up time is provided, the apparatus is applied to a microprocessor, where a plurality of pairs of pins are configured on the microprocessor, and different pairs of pins are connected to detection circuits configured to perform different detection functions; including: a first acquisition module, configured to, in a case where it is determined that the power interruption hold up time of a server PSU needs to be adjusted, acquire input power consumption of the server PSU and a voltage difference between output voltages of a power supply PFC stage circuit, wherein the input power consumption is detected by a first detection circuit, and the voltage difference is detected by a second detection circuit; a first determining module, configured to determine, according to the input power consumption and the voltage difference, a correspondence between the power interruption hold up time of the server PSU and an output capacitance of the power supply PFC stage circuit; and a first adjustment module, configured to adjust, according to the correspondence, the output capacitance to adjust the power interruption hold up time of the server PSU to first power interruption hold up time.

According to still another embodiment of the present disclosure, a microprocessor is provided, including: the above apparatus for adjusting power interruption hold up time.

According to yet another embodiment of the present disclosure, a non-volatile computer-readable storage medium is further provided, where the non-volatile computer-readable storage medium stores a computer program, and the computer program is configured to execute the operations in any of the above method embodiments when running.

According to another embodiment of the present disclosure, an electronic device is further provided, including a memory and a processor. A computer program is stored in the memory, and the processor is configured to run the computer program, so that the operations in any of the above method embodiments are performed.

According to another embodiment of the present disclosure, a computer program product is further provided, including a computer program, and when the computer program is executed by a processor, the operations of any of the above method embodiments are implemented.

Through the present disclosure, an effective control manner is provided for optimizing the power interruption hold up time of the server PSU during an input voltage interruption or voltage sag, without introducing an additional boost circuit, but rather by adjusting the output capacitance according to a correspondence between the power interruption hold up time and output capacitance, thereby implementing adjustment of the power interruption hold up time. Compared to a conventional method that relies on adding a boost circuit and other hardware, the present disclosure significantly reduces costs, saves space, improves a power density of the server PSU, and simplifies a maintenance process, which effectively solves problems in the related art of reducing the power interruption hold up time of the server PSU by adding the boost circuit and other hardware, which resulting in an increased power supply size, higher costs, lower reliability of the server PSU, and the like.

## Brief Description of the Drawings

FIG. 1 is a schematic diagram of an input voltage interruption waveform in the related art;

FIG. 2 is a schematic diagram of an input voltage sag waveform in the related art;

FIG. 3 is a block diagram of a hardware structure of a server device for a method for adjusting power interruption hold up time according to an embodiment of the present disclosure;

FIG. 4 is a flowchart of the method for adjusting power interruption hold up time according to an embodiment of the present disclosure;

FIG. 5 is a schematic structural diagram of a server PSU according to an embodiment of the present disclosure;

FIG. 6 is a block diagram of a boost circuit structure of an active power factor correction (PFC) stage circuit according to an embodiment of the present disclosure;

FIG. 7 is a schematic diagram of an inductor effect waveform of a boost circuit according to an embodiment of the present disclosure;

FIG. 8 is a diagram of a power supply PFC circuit and a control architecture according to an embodiment of the present disclosure;

FIG. 9 is a schematic diagram of a process of a PFC output voltage boost during input voltage interruption and sag according to an embodiment of the present disclosure;

FIG. 10 is a schematic diagram of a detection circuit of an input voltage according to an embodiment of the present disclosure; and

FIG. 11 is a structural block diagram of an apparatus for adjusting power interruption hold up time according to an embodiment of the present disclosure.

## Detailed Description of the Embodiments

Embodiments of the present disclosure are described in detail as follows with reference to accompanying drawings and in combination with embodiments.

It should be noted that, in the specification of the present disclosure, claims, and the accompanying drawings of the present disclosure, the terms "first", "second", and the like are intended to distinguish similar objects but do not necessarily indicate a specific order or sequence.

Power quality problems may be divided into the following seven types according to the IEEE definition of power quality disturbances and according to waveforms:

(1) Transients; (2) Interruptions; (3) Voltage sags/undervoltages; (4) Voltage swells/Overvoltages; (5) Waveform distortion; (6) Voltage fluctuations; (7) Frequency variations.

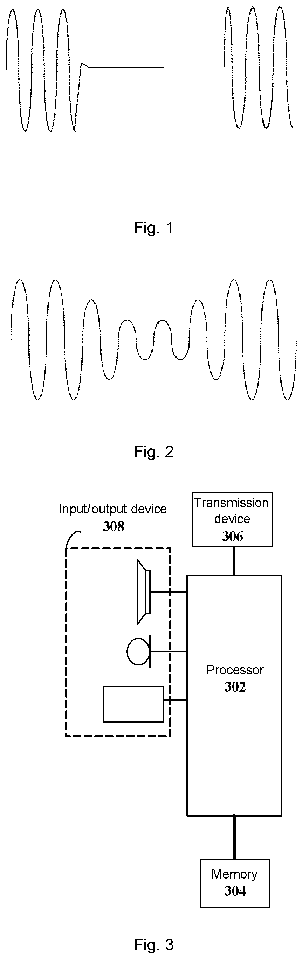

The interruption is defined as complete disappearance of a supply voltage or load current. Depending on duration, the interruptions may be classified into a momentary interruption, a temporary interruption, a short-term interruption, or a sustained interruption. FIG. 1 is a schematic diagram of an input voltage interruption waveform, and duration ranges of various interruption types are as follows:

Momentary interruption: 0.5 to 30 cycles;

Temporary interruption: 30 cycles to 2 seconds;

Short-term interruption: 2 seconds to 2 minutes; and

Sustained interruption: more than 2 minutes.

The voltage sag means a sag in an AC voltage at a given frequency (50-60 Hz), which returns to normal after a brief period of half a cycle to 1 minute. According to the European standard EN50160, the voltage sag means a voltage drop below 90% of a nominal value and then recovers above 90%, with duration of 10 ms to 60 s. Therefore, a voltage drop lasting more than 1 minute is considered a power outage. A voltage is calculated according to the nominal value. When the voltage drops by 3% after dropping by 92% from the nominal value, this is called a voltage sag by 11%. FIG. 2 is an input voltage sag waveform. A process in which a power infrastructure attempts to eliminate a remote fault may cause a problem to an end user. Present disclosuresuch problem is serious, the problem is considered an interruption. However, a problem that is quickly eliminated or rapidly restored may manifest as a voltage sag.

The input interruption or voltage sag is usually caused by a fault in a power supply system, such as starting a heavy load (for example, starting a large air conditioning device for the first time) and troubleshooting a remote power device. Similarly, starting a large motor in an industrial plant may also cause a significant voltage drop. Factors leading to a short circuit in a power supply device include tree growing and contacting an overhead cable, or cable damage (such as a power supply device fault caused by excavation works), or weather factors include an overhead cable being struck by lightning and tripping. The momentary interruptions, temporary interruptions, short-term interruptions, or sustained interruptions all may cause damage, loss, and downtime to users ranging from households to industrial users. Home or small business computer users may lose important data due to information damage caused by device power-off.

Usually, a data center uses an uninterruptible power system (UPS) to prevent input interruptions or voltage sags. The UPS provides a backup Alternating Current (AC) power supply to an electrical carrying apparatus in case of grid anomalies (such as power outages, undervoltages, interference, or surges), maintaining normal operation of electric appliance. Typically, the uninterruptible power system is configured to maintain uninterrupted operation of computers (especially servers), switches, and other critical commercial apparatuses or precision instruments, preventing data loss, a telephone network interruption, or loss of instrument control. Present disclosurethe mains power fails, the UPS switches to battery power supply to ensure the system does not shut down. Switching time means time required for the UPS to complete switching and ensure an uninterrupted power supply. The switching time also means time required for the UPS to switch a power supply back to the mains power after the problem is resolved, which needs to be completed within half an AC cycle to one AC cycle. For an AC power supply frequency of 50 Hz, $1/50\,\text{Hz} - 1/(2 \times 50\,\text{Hz}) = 20\,\text{ms} - 10\,\text{ms}$ is required; for an AC power supply frequency of 60 Hz, $1/60\,\text{Hz} - 1/(2 \times 60\,\text{Hz}) = 16\,\text{ms} - 8\,\text{ms}$ is required. Therefore, it is recommended that, under a full system load, the UPS switches to the battery power supply within 20 ms. Accordingly, the strictest standard for power interruption hold up time of the server PSU-up time is to maintain 100% load output for 20 ms. It should be noted that the duration is used as an exemplary illustration in the present disclosure. In subsequent applications, the duration may be flexibly set according to actual conditions, for example, the duration may also be set to 30 ms, 50 ms, or the like, depending on actual conditions. The present disclosure provides a server PSU that may maintain the power interruption hold up time at an optimal 20 ms under 75% to 100% load operation, even when an input interruption or a voltage sag occurs. The following describes the present disclosure with reference to an embodiment.

A method embodiment provided in the embodiment of the present disclosure may be executed in a server device or a similar computing apparatus. Taking operation on a server device as an example, FIG. 3 is a block diagram of a hardware structure of a server device implementing a method for adjusting power interruption hold up time according to an embodiment of the present disclosure. As shown in FIG. 3, the server device may include one or more (only one is shown in FIG. 3) processors 302 (a processor 302 may include, but is not limited to, a microprocessor MCU or a processing apparatus such as a programmable logic device FPGA) and a memory 304 which is configured to store data. The server device may include a transmission device 306 for communication and an I/O device 308. It may be understood by those skilled in the art that the structure shown in FIG. 3 is merely illustrative and does not impose any limitation on a structure of the above server device. For example, the server device may further include more or fewer components than components shown in FIG. 3, or the server device may have a different configuration from a configuration shown in FIG. 3.

The memory 304 may be configured to store a computer program, such as an application software program and a module, including a computer program corresponding to the method for adjusting power interruption hold up time as described in the embodiment of the present disclosure. The processor 302 executes various functional applications and data processing by running the computer program stored in the memory 304, thereby implementing the above method.

The memory 304 may include a high-speed random access memory, and may also include a non-volatile memory, such as one or more magnetic storage apparatuses, a flash memory, or another non-volatile solid-state memory. In some examples, the memory 304 may further include a memory remotely configured relative to the processor 302, and such remote memory may be connected to the server device via a network. Examples of the above network include, but are not limited to, the Internet, Intranet, a local area network, a mobile communication network, and a combination thereof.

The transmission device 306 is configured to receive or transmit data via a network. The above network examples may include a wireless network provided by a communication provider of the server device. In one example, the transmission device 306 may includes a network interface controller (NIC), which may be connected to other network devices via a base station to communicate with the Internet. In one example, the transmission device 306 may be a radio frequency (RF) module, configured to communicate with the Internet wirelessly.

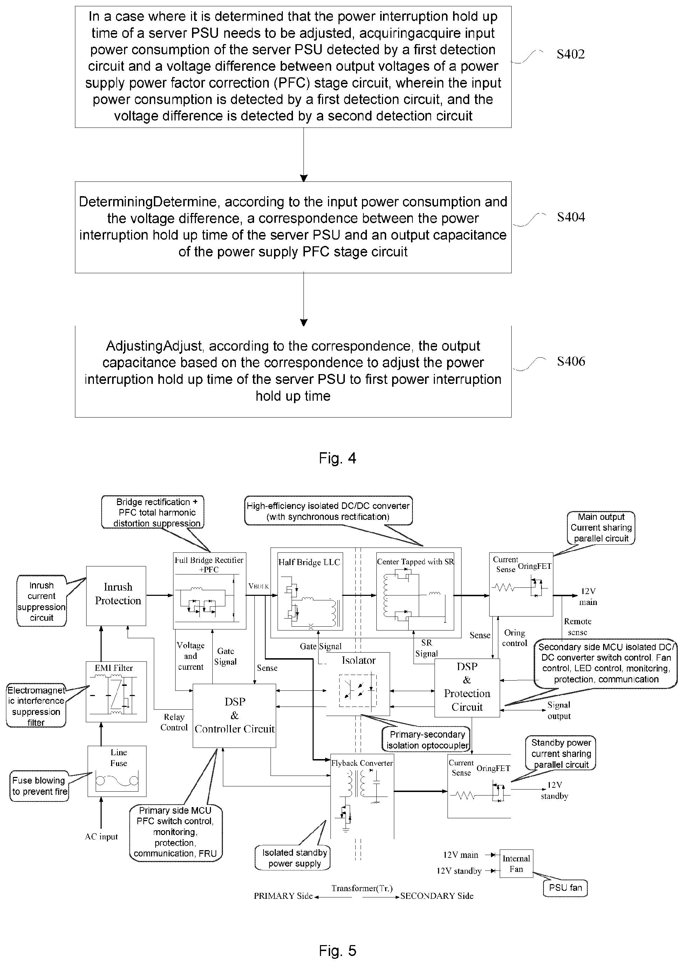

In this embodiment, a method for adjusting power interruption hold up time is provided, which may be applied to a Microcontroller Unit (MCU) a plurality of pairs of pins are configured on the microprocessor, where different pairs of pins are connected to detection circuits configured to perform different detection functions. FIG. 4 is a flowchart of the method for adjusting power interruption hold up time according to an embodiment of the present disclosure. As shown in FIG. 4, the process includes the following operations:

Operation S402: In a case where it is determined that the power interruption hold up time of a server PSU needs to be adjusted, acquiring input power consumption of the server PSU and a voltage difference between output voltages of a power supply power factor correction (PFC) stage circuit, wherein the input power consumption is detected by a first detection circuit, and the voltage difference is detected by a second detection circuit;

Operation S404: Determining, according to the input power consumption and the voltage difference, a correspondence between the power interruption hold up time of the server PSU and an output capacitance of the power supply PFC stage circuit ; and

Operation S406: Adjusting, according to the correspondence, the output capacitance to adjust the power interruption hold up time of the server PSU to first power interruption hold up time.

In the above embodiment, the server PSU may also be referred to as a server PSU Unit, and a structure thereof may be referenced in FIG. 5 (a circuit diagram in FIG. 5 may also be referred to as an AC/DC digital power supply unit block diagram), where a plurality of pairs of pins are configured in the MCU, and each pair of pins is connected to a detection circuit for real-time monitoring different key parameters of the server PSU. For example, the first detection circuit is responsible for detecting the input power consumption of the server PSU, while the second detection circuit detects a voltage of a Power Factor Correction stage (PFC stage) circuit. For example, the second detection circuit may detect an output voltage difference of the PFC stage circuit (also referred to as a PFC circuit). The second detection circuit may detect a maximum output voltage of the PFC circuit and a minimum voltage that may maintain server voltage output, thereby determining a voltage difference according to the two values. Additionally, MCU may be connected to other circuits and configured to detect different parameters, such as being connected to a circuit configured to detect an input current of the PFC circuit. The input circuit is detected to perform a current protection operation or some actions according to a current detection result, or being connected to a circuit configured to detect an input voltage of the PFC circuit and the like. Types of connected circuits may be flexibly set according to actual conditions. Through the cooperation of these pins and detection circuits, the MCU may quickly identify parameter changes in some scenarios, such as identifying any change in the input voltage, including an interruption or a voltage sag, and accurately measuring the impact of these changes on the server PSU.

In the above embodiment, there are a plurality of ways to adjust an output capacitance, for example, a plurality of capacitor connection branches are configured in advance, and a required capacitor branch is selected according to actual conditions to achieve the purpose of adjusting the output capacitance. For another example, a charging/discharging state of the capacitor, namely, a voltage across the capacitor, is controlled, to indirectly affect the energy of the capacitor provided during a power interruption, thereby extending the power interruption hold up time. An energy storage capacity of the capacitor is proportional to a product of a voltage and capacitance value thereof. Therefore, on the premise that the capacitor is not replaced, software control may be used to charge the capacitor to a higher voltage before a power interruption, increasing the energy provided by the capacitor and thus extending the hold up time. For example, when an input voltage sag or interruption occurs, the output voltage of the PFC circuit may be adjusted so that the capacitor stores more energy at the moment of the power interruption. To be specific, the voltage across the capacitor is increased to simulate the effect of increasing capacitance. The key to this technology lies in accurately determining the occurrence of the voltage interruption or sag and promptly adjusting a control signal of the PFC circuit to quickly increase a capacitor voltage.

In the above embodiment, an effective control manner is provided for optimizing the power interruption hold up time of the server PSU during an input voltage interruption or voltage sag, without introducing an additional boost circuit, but rather by adjusting the output capacitance according to a correspondence between the power interruption hold up time and the output capacitance, thereby implementing adjustment of the power interruption hold up time. Compared to a conventional method that relies on adding a boost circuit and other hardware, the present disclosure significantly reduces costs, saves space, improves a power density of the server PSU, and simplifies a maintenance process, which effectively solves problems in the related art of reducing the power interruption hold up time of the server PSU by adding the boost circuit and other hardware, which resulting in an increased power supply size, higher costs, lower reliability of the server PSU, and the like.

In an exemplary embodiment, acquiring the input power consumption of the server PSU detected by the first detection circuit includes: acquiring output power consumption of the server PSU, an output percentage of the server PSU, and power conversion efficiency of the server PSU, wherein the output power consumption, the output percentage, and the power conversion efficiency are all detected by the first detection circuit; and determining the input power consumption according to the output power consumption, the output percentage, and the power conversion efficiency. In the above embodiment, the input power consumption of the server PSU may be determined according to the output power consumption, the output percentage, and the power conversion efficiency. The output power consumption of the server PSU may be measured by a sum of products of all DC output voltages and currents provided. For example, in a case where the server PSU provides a plurality of output voltages such as +12V, +5V, and +3.3V, power consumption (a power) of each output is a product of the output voltage and a corresponding current. A total output power consumption (Pout) is a sum of all output power; the output percentage is used to reflect a ratio of the total output power of the server PSU to a full load power, namely, a ratio of a current actual load to a maximum possible load. This parameter is usually determined by monitoring key performance indicators such as a current CPU utilization, RAM usage, and a hard disk activity of a server. Conversion efficiency of the server PSU is used to evaluate a capability of the server for converting AC input power consumption into usable DC output power consumption.

In an exemplary embodiment, determining the input power consumption according to the output power consumption, the output percentage, and the power conversion efficiency includes: determining the input power consumption Pin according to the following formula (1): Pin = Pout $\times$ Load / $\eta$, Formula (1); where Pout is the output power consumption, Load is the output percentage, and $\eta$ is the power conversion efficiency. The above embodiment enables precise calculation of the output power consumption of the server PSU, thereby optimizing power supply management, improving energy efficiency, and achieving the purpose of predicting and preventing a potential power supply problem.

In an exemplary embodiment, acquiring the voltage difference between output voltages of the power supply PFC stage circuit detected by the second detection circuit includes: acquiring a maximum voltage value output by the power supply PFC stage circuit, which is detected by the second detection circuit, and a minimum voltage value for maintaining the output of the server PSU; and determining a difference between the maximum voltage value and the minimum voltages as the voltage difference.

In the above embodiment, the second detection circuit is responsible for monitoring an output voltage of the PFC circuit in the server PSU. During normal operation, the second detection circuit continuously monitors and records a peak voltage across an output capacitance (Bulk Cap) of the PFC circuit, namely, a maximum value of the output voltage. This value reflects a maximum voltage support that the PFC circuit may provide under full load and light load conditions. In addition, to ensure stable output from the server PSU during a power interruption, a minimum voltage maintenance value (or minimum voltage) needs to be set, which is a minimum voltage required for the power supply to maintain a critical server load after the power interruption. This minimum voltage value is usually set according to the minimum output voltage requirements of the server PSU and a power interruption hold up time standard, ensuring that the output from the power supply does not fall below a voltage threshold required for stable server operation under any possible grid disturbance. The above voltage difference is the difference between the maximum voltage value and the minimum voltage value, and this voltage difference may reflect an energy range that the output capacitance of the PFC circuit may be released during a power interruption.

In an exemplary embodiment, determining, according to the input power consumption and the voltage difference, the correspondence between the power interruption hold up time of the server PSU and the output capacitance of the power supply PFC stage circuit includes: determining, according to the following formula (2), the correspondence between power interruption hold up time T_holdup of the server PSU and the output capacitance C_bulk: T_holdup = C_bulk $\times$ $\Delta V^2$ / (2 $\times$ Pin) Formula (2), where $\Delta V$ is the voltage difference, and Pin is the input power consumption. The above formula enables precise calculation of the correspondence between the power interruption hold up time and the output capacitance, implementing accurate calculation and optimized adjustment of the power interruption hold up time of the server PSU. This not only enhances the intelligence and reliability of power management, but also optimizes power supply design, improves an energy efficiency ratio, simplifies a maintenance process, and is of significant importance for improving the stability and business continuity of a high-performance server in a complex power environment.

In an exemplary embodiment, in a case where it is determined that the power interruption hold up time of the server PSU needs to be adjusted, the method further includes: determining a correspondence between the power interruption hold up time of the server PSU and an output voltage of the power supply PFC stage circuit; and adjusting, according to the correspondence between the power interruption hold up time of the server PSU and the output voltage of the power supply PFC stage circuit, the output voltage of the power supply PFC stage circuit to adjust the power interruption hold up time of the server PSU to a second power interruption hold up time. In this embodiment, the purpose of adjusting the output capacitance of the PFC circuit may be achieved by adjusting the output voltage of the PFC circuit. In addition, according to the above embodiment of adjusting the power interruption hold up time by adjusting the output capacitance, the power interruption hold up time may be further adjusted by adjusting the output voltage of the PFC circuit. For example, some of the power interruption hold up time may be adjusted according to the above correspondence between the output capacitance and the power interruption hold up time, and then the remaining hold up time may be adjusted according to the correspondence between the power interruption hold up time and the output voltage, so that the power interruption hold up time is adjusted to a required value, such as 20 ms, 25 ms, 30 ms, or the like. The power interruption hold up time may be controlled more precisely in the above multi-stage adjustment method, ensuring that the server PSU may achieve optimal power interruption hold up time under different load and voltage conditions to meet the needs of various scenarios.

In an exemplary embodiment, determining the correspondence between the power interruption hold up time of server PSU and the output voltage of the power supply PFC circuit includes: determining, according to the formula (2), the following formula (3), where the formula (3) indicates the correspondence between the power interruption hold up time T_holdup of the server PSU and the output voltage Pout of the power PFC circuit: T_holdup = C_bulk $\times$ (1 - C_error) $\times$ (Vbulk_high^2 - Vbulk_low^2) $\times$ $\eta$ / (2 $\times$ Pout $\times$ Load), Formula (3), where C_error is the error value of the output capacitance, Vbulk_high is the maximum voltage value output by the power supply PFC circuit, and Vbulk_low is the minimum voltage value for maintaining the output of the server PSU. In the above embodiment, formula (2) mentioned previously is further optimized to acquire formula (3), which comprehensively considers an error value of the output capacitance of the PFC circuit, correcting a calculation deviation caused by measurement errors or other uncertainties, and enables more accurate calculation of energy that the capacitor may store and release during a power interruption. This is more consistent with the actual performance of the capacitor and provides more reliable energy estimation. In addition, a calculation method for a square of a voltage difference (namely, $\Delta V$^2) is also optimized by using an improved formula, which highlights a relationship among the maximum voltage value, the minimum voltage value, and the power interruption hold up time of the PFC circuit, providing simpler and more accurate calculation.

In an exemplary embodiment, the adjusting, according to the correspondence, the output voltage of the power supply PFC stage circuit to adjust the power interruption hold up time of the server PSU to the second power interruption hold up time includes: determining a target output voltage, where in a case where the output voltage of the power supply PFC stage circuit is the target output voltage, the power interruption hold up time of the server PSU is maintained at the second power interruption hold up time; and adjusting a duty cycle according to a current input voltage of the power supply PFC stage circuit and a correspondence between the input voltage of the power supply PFC stage circuit and the output voltage of the power supply PFC stage circuit, so as to adjust the output voltage of the power supply PFC stage circuit to the target output voltage. In this embodiment, there is a correlation between the input voltage and the output voltage of the PFC stage circuit. The output voltage may be adjusted to an ideal value according to the current input voltage by adjusting the duty cycle. The input voltage may be detected by the MCU through a detection circuit, and the output voltage may be detected by the MCU through a detection circuit. A circuit for detecting the output voltage may further be used to verify whether the output voltage has been adjusted to the ideal value.

In an exemplary embodiment, before adjusting the duty cycle, the method further includes: determining, according to the following formula (4), the correspondence between the input voltage Vin of the power supply PFC stage circuit and the output voltage Vout of the power supply PFC stage circuit: Vout = Vin / (1-D), Formula (4); where D is the duty cycle.

In an exemplary embodiment, before adjusting the duty cycle, the method further includes: acquiring the current input voltage of the power supply PFC stage circuit detected by a third detection circuit. In this embodiment, a structure of the third detection circuit may be flexibly configured according to an actual application scenario and a requirement for detection accuracy. The structure of the third detection circuit is exemplified as follows.

In an exemplary embodiment, the third detection circuit includes a first resistor and a second resistor, where a first terminal of the first resistor is connected to an input voltage detection terminal of the power supply PFC stage circuit, a second terminal of the first resistor is connected to a target pin of the microprocessor and a first terminal of the second resistor, and a second terminal of the second resistor is grounded. In this embodiment, the first resistor includes a first sub-resistor and a second sub-resistor, the first sub-resistor and the second sub-resistor each have a resistance value of 499 K$\Omega$, and a resistance value of the second resistor is 5.57 K$\Omega$. It should also be noted that quantities of the first resistor and the second resistor may be other values respectively. For example, quantities of the first resistor and the second resistor each may be one, or a quantity of the first resistor may be one and a quantity of the second resistor may be two, or the like. When a quantity of each of the first resistor and the second resistor differs, a resistance value of each resistor may also be different. The resistance value may be adjusted according to an actual structure of the detection circuit.

The present disclosure is entirely described below with reference to some embodiments:
Implementation of the embodiments of the present disclosure is divided into three main parts:

1. Determining an input voltage of a server PSU (server PSU Unit, corresponding to the above PFC stage circuit of the server PSU, the PFC circuit may also be referred to as PFC);

2. Amplifying a PFC control signal of the Server PSU; and

3. Designing a PFC output voltage of the Server PSU.

The three parts are described as follows:

1. Determining the voltage of the PFC of the server PSU.

The determining the voltage of the PFC of the server PSU is implemented in the following two parts:

(1) Determining time points when input voltage interruption and sag occur;

(2) Determining PFC voltage boost conditions when the input voltage interruption and sag occur.

Where:

(1) Determining the input voltage interruption and sag:
In the related art, the Server PSU uses the MCU to perform functions such as converter switch control, fan control, Light Emitting Diode (LED) control, monitoring, protection, and communication within a power supply. In terms of division of labor, the MCU is categorized into a primary side MCU and a secondary side MCU.

Main functions of the primary side MCU include: (1) PFC circuit switch control; (2) AC input voltage and current monitoring and protection; (3) inrush current protection switch control; (4) communication functions such as UART (Universal Asynchronous Receiver/Transmitter), SPI (Serial Peripheral Interface), I2C (Inter-Integrated Circuit); and (5) FRU (Field Replace Unit) data storage.

Main functions of the secondary side MCU include: (1) high-efficiency converter (that is, Direct Current to Direct Current Converter (DCDC)) switch control; (2) DC output voltage and current monitoring and protection; (3) PSU fan control and over-temperature; and (4) communication functions such as UART, SPI, and I2C.

The PFC stage circuit is configured to control the power interruption hold up time of the server PSU. A plurality of electrical products have a very low power factor due to an internal impedance characteristic. To improve the power factor of the electrical products, it is necessary to install a PFC circuit at a power input end. However, adding such a circuit inevitably increases manufacturing costs, which will ultimately be passed on to consumers. Therefore, manufacturers, considering cost savings, usually prioritize low prices and are reluctant to have customers pay extra for these environmental protection costs. Most consumers, due to a lack of understanding the importance of the PFC circuit, mistakenly believe that building more power plants is the only solution to power shortages. This is a major problem in power supply for most developing countries.

A primary function of the PFC stage circuit is to synchronize a phase of a voltage and current and make a load approximate a resistive load. There are various methods in circuit design to achieve this primary function. According to used elements, power factor correction devices may be classified into a passive power factor corrector and an active power factor corrector. In the best case, the passive power factor corrector may only achieve 70% of a PF value, which is not applicable under strict power factor requirements. To achieve above 85% of the PF value across a full voltage range (90V - 265 Vac) and under both light and heavy load conditions, the active power factor corrector is necessary. An active PFC stage circuit is mostly a boost circuit structure (boost topology).

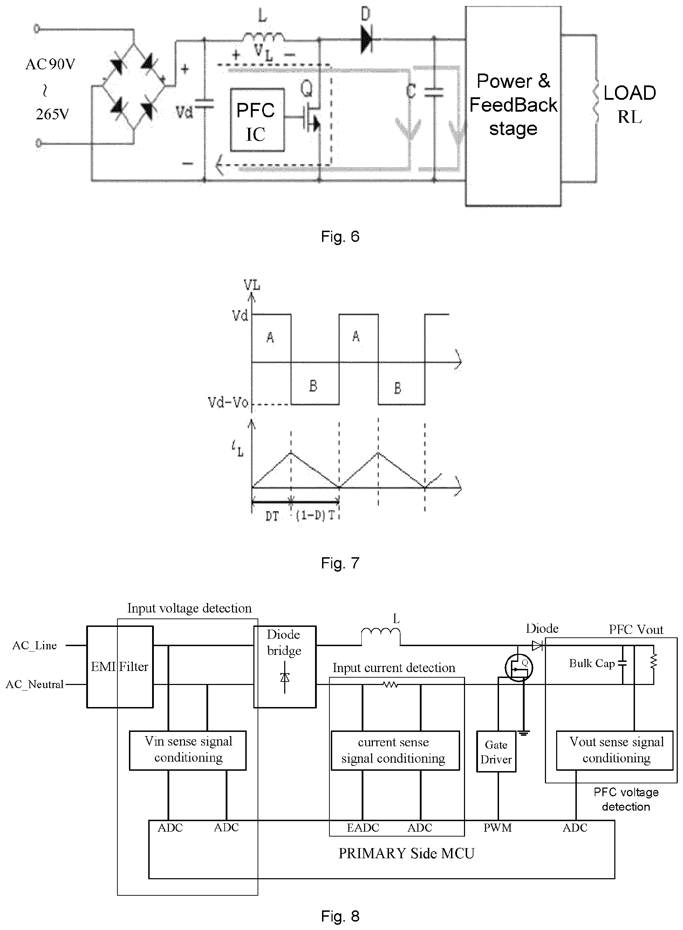

FIG. 6 is a block diagram of a boost circuit structure of an active PFC stage circuit according to an embodiment of the present disclosure, and FIG. 7 is a diagram of an inductor effect waveform of a boost circuit according to an embodiment of the present disclosure. The input voltage is required to be 180V - 265 Vac, and in point Vd, the input voltage is 255V - 375V DC voltage. The boost circuit raises an output voltage Vo to 415V DC. An operation process is as follows:

1. In a case where Q is turned on, a voltage across an inductor is VL = Vd. In this case, Vd, L, and Q form a loop, Vd charges the inductor L, and the loop is indicated by a dashed line in FIG. 6. an inductor current $\zeta$L rises along a same slope until Q is turned off, and then an operating cycle (DT) is finished.

2. In a case where Q is turned off, the inductor voltage reverses and, together with Vd, starts discharging to an output through a diode D. In this case, a capacitor C is being charged, and RL maintains Vo output. A value of Vo is a sum of the input voltage Vd and the inductor voltage (-VL) (since the inductor voltage reverses, -VL is actually a positive value). A loop thereof is indicated by a gray line in FIG. 6, until Q is turned on again (namely, a (1-D)T time period ends).

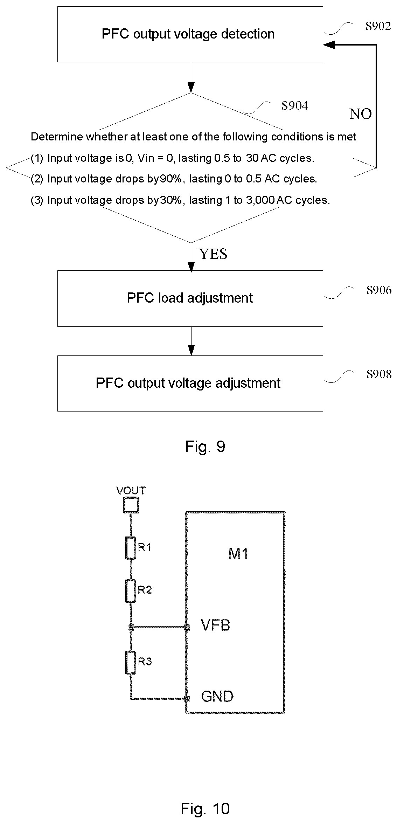

To enable the boost circuit of the active PFC stage circuit in FIG. 7 to have a power factor correction function, a control signal for Q needs to be originated from an integrated circuit with the power factor correction function (PFC IC), and both a voltage loop and a current loop need to be used. These signals are fed back to the PFC IC to control the turn-on and turn-off of Q, thereby implementing current waveform shaping. The PFC ICs are divided into two types: one is a Discontinuous Conduction Mode Power Factor Corrector (DCM PFC), suitable for low power requirements for power factor correction. According to European energy regulations, power supply units above 70W need to be equipped with PFC circuits. The DCM PFC is usually used for power supplies below 200W. The other type is a Continuous Conduction Mode Power Factor Corrector (CCM PFC), which is usually used for 200W and above up to several thousand watts. The primary side MCU controls the input voltage and output voltage of the PFC stage as well as the feedback control, and a control signal for a control. FIG. 8 is a diagram of a power supply PFC circuit and a control architecture according to an embodiment of the present disclosure. Refer to FIG. 9 for a process for determining input voltage sag and interruption. FIG. 9 is used to demonstrate a PFC output voltage boost process when the input voltage interruption and sag occur. It is necessary to add determining logic to primary side MCU firmware, to introduce and determine when the input voltage interruption and sag occur, which may include the following operations.

S902: Detect a PFC input voltage;

S904: Determine whether interruption and sag conditions are met (these conditions may be set according to conditions shown in FIG. 9 or to other similar conditions);

S906: Present disclosurethe interruption and sag conditions are met, perform PFC load adjustment; and

S908: Perform PFC output voltage adjustment.

The interruption conditions include the following: transient interruption continues for 0.5 to 30 AC cycles; and voltage sag means a drop in an AC voltage at a given frequency (50 - 60 Hz), which returns to normal after short duration of half a cycle to one minute. According to European standard EN50160, the voltage drops below 90% of a standard value and then returns above 90%, with duration of 10 ms to 60 s.

The power interruption hold up time for the PFC circuit is designed as follows:

The power interruption hold up time for the PFC circuit mainly relies on a PFC output capacitance Bulk Cap. Therefore, the power interruption hold up time may be derived from a capacitor mode according to the law of energy conservation:

$$Pin \times \Delta T\_holdup = 1 / 2 \times C\_bulk \times \Delta V^2;$$

Therefore, the power interruption hold up time may be acquired by rearranging the formula as follows:

$$\Delta T\_holdup = C\_bulk \times \Delta V^2 / (2 \times Pin);$$

where $\Delta V^2$ represents $\Delta V$ squared, and meanings of all parameters are as follows:

(1) Pin: Server PSU input power consumption, which is also Pin = Pout (Server PSU output power) $\times$ Load (output percentage %) / η (Server PSU conversion efficiency);

(2) $\Delta T\_holdup$: power interruption hold up time (namely, the above power interruption hold up time);

(3) C_bulk: Bulk Cap capacitance of the PFC output capacitance, and C_error is an error value of the Bulk Cap capacitance, up to 20%; and

(4) $\Delta V$: PFC circuit output voltage Vbulk, and a voltage difference from a highest value down to a minimum value that may maintain output may be expressed as:

Vbulk_high – Vbulk_low;

Therefore, the formula is substituted into the above formula and is properly transformed, to acquire a formula for the power interruption hold up time in the PFC circuit:

$$\Delta T\_holdup = C\_bulk \times (1 - C\_error) \times (Vbulk\_high^2 - Vbulk\_low^2) \times \eta / (2 \times Pout \times Load).$$

For a server with a maximum output of 1,600W, according to the Bulk Cap capacitance of the PFC output capacitance and an operating load range, the power interruption hold up time in the PFC circuit is shown in Table 1:

Table 1

| PFC output capacitance value, with a tolerance of 20% | hold up time (ms) at output @100% load | hold up time (ms) at output @85% load | hold up time (ms) at output @75% load | Remark |
|---|---|---|---|---|
| 1,270 uF | 25.75 | 30.28 | 34.32 | PFC circuit output voltage drops from 415V to 290V |
| 1,000 uF | 20.27 | 23.85 | 27.03 | |
| 925uF | 18.75 | 22.06 | 25 | |
| 870uF | 17.63 | 20.75 | 23.51 | |
| 810uF | 16.42 | 19.31 | 21.89 | |

To achieve more than 20 ms hold up time at 100% full load output, an output capacitance of more than 1,000 uF needs to be selected. This design value may only be supported by a limited number of manufacturers, resulting in a difficulty in design and material selection.

Present disclosurethe PFC circuit output voltage is adjusted from 450V down to 290V, and the power interruption hold up time may also be effectively extended. These two values are for illustrative purposes. In actual applications, an ideal PFC voltage and a reduced voltage may be set according to practical requirements, for example, the ideal voltage is set to 480V, 500V, or the like). In this case, an output capacitance of 810 uF with a voltage rating of 600V is selected, which may achieve more than 20 ms hold up time at 100% full load output, without the need for a special capacitor value, allowing for more manufacturer options, as shown in Table 2.

Table 2

| PFC output capacitance value, with a tolerance of 20% | hold up time (ms) at output @100% load | hold up time (ms) at output @85% load | hold up time (ms) at output @75% load | Remark |
|---|---|---|---|---|
| 1,270 uF | 34.58 | 40.69 | 46.11 | PFC circuit output voltage drops from 450V to 290V |
| 1,000 uF | 27.23 | 32.04 | 36.31 | |
| 925uF | 25.19 | 29.63 | 33.59 | |
| 870uF | 23.69 | 27.87 | 31.59 | |
| 810uF | 22.06 | 25.95 | 29.41 | |

(2) Determining PFC voltage boost when the input voltage interruption and sag occur:

When the input voltage sag occurs, a feedback voltage thereof is determined by using the following formula:

(1) Input voltage is 0, Vin = 0, lasting for 0.5 to 30 AC cycles;

(2) Input voltage drops by 90%, lasting for 0 to 0.5 AC cycles; and

(3) Input voltage drops by 30%, lasting for 1 to 3,000 AC cycles.

It should be noted that the above several determining methods are only examples. In actual applications, other determining methods may alternatively be used. For example, voltage drops by 50% for 1 to 500 cycles, voltage drops by 70% for 1 to 2,000 AC cycles, or the like. A determining criterion may be set according to practical requirements.

II. PFC stage control signal boost of server PSU:

The PFC stage and a control signal architecture in a power supply circuit are shown in FIG. 8. The primary side MCU provides a PWM (Pulse Width Modulation) signal through a gate driver to a main switch Q as a drive signal, so that PFC and PFC voltage output are completed.

Therefore, a duty cycle (D) of the PFC control signal is limited, so that a PFC voltage range may be controlled. A relationship among a PFC voltage, an input voltage (Vin), and the duty cycle D is: PFC Vout = Vin / (1-D), D<1 (duty cycle is less than 1). That is, for the PFC circuit, when Vin is much less than PFC Vout, a larger D is required to meet the boost demand. Therefore, as an input voltage range is larger, a chip's duty cycle adjustment capability is greater. Present disclosurea voltage sag or interruption occurs and PFC Vout needs to be raised to 450V, a limit of the duty cycle D is set as follows:

(1) Input voltage is 0, Vin = 0, lasting for 0.5 to 30 AC cycles:
In this case, Vin is 0, PFC output needs to be raised to 450V, and the input voltage is 220 Vac. To be specific, the PFC output voltage is 220 × 1.414 = 311, dropping to 290V.

Duty cycle D boost: 450 = 311 / (1-D) - 450 = 290 / (1-D) =>, and the duty cycle D is 0.3 - 0.35.

(2) Input voltage drops by 90%, lasting for 0 to 0.5 AC cycles.

In this case, Vin is 220 Vac, dropping by 90% to 22V. When the PFC voltage needs to be raised to 450V, the duty cycle D boost is 450 = 22 × 1.414 / (1-D) =>, and the duty cycle needs to be increased to 0.93.

(3) The input voltage drops by 30%, lasting for 1 to 3,000 AC cycles.

In this case, Vin is 220 Vac, dropping by 30% to 154V. When the PFC voltage needs to be raised to 450V, the limit of the duty cycle D is: 440 = 154 × 1.414 / (1-D) =>, and the duty cycle needs to be increased to 0.52.

III. Design of a PFC output voltage of server PSU:

The core is that the primary side MCU controls the output voltage (V_Bulk) of the PFC stage, which needs to be adjusted to 450V. The input voltage detection circuit is shown in FIG. 10, and a formula for determining a feedback voltage of the PFC stage output voltage of the server PSU is as follows:

$$Vo = Vref × (R1 + R2 + R3) / R3;$$

Where M1 is the primary side MCU;
The reference feedback voltage Vref is set to 2.5V;
Feedback resistor accuracy is 1% and is a high voltage resistor;

Designed values for R1, R2, R3 are as follows:
According to the formula, the output voltage needs to be stabilized at 450V. Vref is set to 2.5V, R1 and R2 are both 499K ohm, and R3 is 5.57K ohm. Each parameter may be found in Table 3:

Table 3

| Item | Symbol | Error (%) | min | typ | max | unit | Remark |
|---|---|---|---|---|---|---|---|
| Resistor from Vbulk | R1 | 1 | 494.01 | 499 | 503.99 | KΩ | |
| Resistor Between R1 and M1 | R2 | 1 | 494.01 | 499 | 503.99 | KΩ | |
| Resistor Between M1fb and GND | R3 | 1 | 5.5143 | 5.57 | 5.6257 | KΩ | |
| Vreference | Vref | | 2.43 | 2.5 | 2.57 | V | |
| OVP Reference | OVP | | 2.65 | 2.75 | 2.85 | V | |
| PFC Output Voltage | Vo | | 429.20 | 450.44 | 472.35 | V | |

(continued)

| Item | Symbol | Error (%) | min | typ | max | unit | Remark |
|---|---|---|---|---|---|---|---|
| M1 Inner PFC Over Voltage | Vovp | | 468.06 | 495.48 | 523.81 | V | |

Therefore, when the input voltage sag or interruption occurs, embedding this firmware function into the primary side MCU may effectively extend the power interruption hold up time of the server PSU. There is no need for a special capacitor value, allowing for more manufacturer options, and optimal 20 ms hold up time may be maintained under 75% to 100% power load.

It should be noted that application scenarios of the above embodiment are quite broad. For example, in a data center and server site, input voltage sag may occur due to starting a heavy load (such as starting a large air conditioning device), troubleshooting a remote electrical device, or starting a large motor in an industrial plant. In such scenario, the solution in the embodiment of the present disclosure may be used.

Through the embodiment of the present disclosure, the following effects may be achieved:
This firmware function is embedded into the primary side MCU in advance when the input voltage sag or interruption occurs, so that the power interruption hold up time of the server PSU may be effectively extended, with no need for a special capacitor value or an additional hardware function, and optimal 20 ms hold up time may be maintained under 75% to 100% power load.

This eliminates the need for maintenance personnel to go to the site to troubleshoot a problem caused by "the input voltage sag or interruption."

No additional hardware installation or special capacitor value is required; and this function may be added to an existing architecture and firmware.

No special technology or novel material is required, making implementation relatively easy.

Firmware design operations are proposed, allowing effective extension of the power interruption hold up time of the server PSU without increasing hardware.

Through the above description of the embodiment, those skilled in the art may clearly understand that the method in the above embodiment may be implemented by software in conjunction with a necessary general hardware platform. Of course, the method may also be implemented by hardware, but in many cases, the former is a better implementation. According to such understanding, the technical solution of the present disclosure, in essence or in terms of contribution to the prior art, may be embodied in the form of a software product. This computer software product is stored on a non-volatile readable storage medium (such as a ROM/RAM, a magnetic disk, or an optical disk), and includes several instructions for enabling a terminal device (which may be a mobile phone, a computer, a server, a network device, or the like) to execute the methods of various embodiments in the present disclosure.

In this embodiment, an apparatus for adjusting power interruption hold up time is also provided. The apparatus is configured to implement the above embodiment and an optional implementation, and details already described are not repeated herein. As used below, a term "module" may mean a combination of software and/or hardware configured to implement a predetermined function. Although an apparatus described in the following embodiment is preferably implemented in software, implementation in hardware or a combination of software and hardware, is also possible and contemplated.

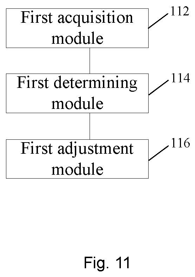

FIG. 11 is a structural block diagram of an apparatus for adjusting power interruption hold up time according to an embodiment of the present disclosure. As shown in FIG. 11, the apparatus is applied to a microprocessor, and a plurality of pairs of pins are configured on the microprocessor. Different pairs of pins are connected to detection circuits configured to perform different detection functions. The apparatus includes: a first acquisition module 112, configured to, in a case where it is determined that the power interruption hold up time of a server PSU needs to be adjusted, acquire input power consumption of the server PSU and a voltage difference between output voltages of a power supply PFC stage circuit, wherein the input power consumption is detected by a first detection circuit, and the voltage difference is detected by a second detection circuit; a first determining module 114, configured to determine, according to the input power consumption and the voltage difference, a correspondence between the power interruption hold up time of the server PSU and an output capacitance of the power supply PFC stage circuit; and a first adjustment module 116, configured to adjust, according to the correspondence, the output capacitance to adjust the power interruption hold up time of the server PSU to first power interruption hold up time.

In an exemplary embodiment, the first acquisition module 112 includes: a first acquisition unit, configured to acquire an output power consumption of the server PSU, an output percentage of the server PSU, and power conversion efficiency of the server PSU, wherein the output power consumption, the output percentage, and the power conversion efficiency are all detected by the first detection circuit; and a first determining unit, configured to determine the input power consumption according to the output power consumption, the output percentage, and the power conversion efficiency.

In an exemplary embodiment, the first determining unit includes: a determining subunit, configured to determine the input power consumption Pin according to the following formula (1): Pin = Pout × Load / $\eta$, Formula (1), where Pout is the output power consumption, Load is the output percentage, and $\eta$ is the power conversion efficiency.

In an exemplary embodiment, the first acquisition module 112 includes: a second acquisition unit, configured to acquire a maximum output voltage of the power supply PFC stage circuit, which is detected by the second detection circuit, and to maintain a minimum voltage value output by the server PSU; and a second determining unit, configured to determine a difference between the maximum voltage value and the minimum voltage value as the voltage difference.

In an exemplary embodiment, the first determining module 114 includes: a third determining unit, configured to determine, according to the following formula (2), the correspondence between the power interruption hold up time T_holdup of the server PSU and the output capacitance C_bulk: T_holdup = C_bulk × $\Delta V^2$ / (2 × Pin), Formula (2); where $\Delta V$ is the voltage difference, and Pin is the input power consumption.

In an exemplary embodiment, the apparatus further includes: a second determining module, configured to, in a case where it is determined that the power interruption hold up time of the server PSU needs to be adjusted, determine a correspondence between the power interruption hold up time of the server PSU and an output voltage of the power supply PFC stage circuit; and a second adjustment module, configured to adjust, according to the correspondence between the power interruption hold up time of the server PSU and the output voltage of the power supply PFC stage circuit, the output voltage of the power supply PFC stage circuit to adjust the power interruption hold up time of the server PSU to a second power interruption hold up time.

In an exemplary embodiment, the second determining module includes: a fourth determining unit, configured to determine, according to the formula (2), the following formula (3), where the formula (3) is used to indicate the correspondence between the power interruption hold up time T_holdup of the server PSU and the output voltage Pout of the power supply PFC stage circuit: T_holdup = C_bulk × (1 - C_error) × (Vbulk_high^2 - Vbulk_low^2) × $\eta$ / (2 × Pout × Load), Formula (3), where C_error is an error value of the output capacitance, Vbulk_high is the maximum voltage value output by the PFC stage circuit, and Vbulk_low is the minimum voltage value for maintaining the output of the server PSU.

In an exemplary embodiment, the second adjustment module includes: a fifth determining unit, configured to determine a target output voltage, where in a case where the output voltage of the power supply PFC stage circuit is the target output voltage, the power interruption hold up time of the server PSU is maintained at the second power interruption hold up time; and an adjustment unit, configured to adjust a duty cycle according to a current input voltage of the power supply PFC stage circuit and a correspondence between the input voltage of the power supply PFC stage circuit and the output voltage of the power supply PFC stage circuit, so as to adjust the output voltage of the power supply PFC stage circuit to the target output voltage.

In an exemplary embodiment, the apparatus further includes: a third determining module, configured to determine, according to the following formula (4), the correspondence between the input voltage Vin of the power supply PFC stage circuit and the output voltage Vout of the power supply PFC stage circuit before adjusting the duty cycle : Vout = Vin / (1 - D), Formula (4), where D is the duty cycle.

In an exemplary embodiment, the apparatus further includes: a second acquisition module, configured to acquire the current input voltage of the power supply PFC stage circuit detected by the third detection circuit before adjusting the duty cycle.

In an exemplary embodiment, the third detection circuit includes a first resistor and a second resistor, where a first terminal of the first resistor is connected to an input voltage detection terminal of the power supply PFC stage circuit, a second terminal of the first resistor is connected to a target pin of the microprocessor and a first terminal of the second resistor, and a second terminal of the second resistor is grounded.

In an exemplary embodiment, the first resistor includes a first sub-resistor and a second sub-resistor, and the first sub-resistor and the second sub-resistor each have a resistance value of 499 K$\Omega$, and the second resistor has a resistance value of 5.57 K$\Omega$.

It should be noted that the above modules may be implemented by software or hardware, and the latter may be implemented in the following manner, but not limited thereto: the above modules are all located in a same processor; or the above modules are located in different processors in any combination.

An embodiment of the present disclosure further provides a microprocessor MCU, including any of the above apparatus for adjusting power interruption hold up time.

An embodiment of the present disclosure further provides a non-volatile computer-readable storage medium, where the non-volatile computer-readable storage medium stores a computer program, and the computer program is configured to execute the operations in any of the above method embodiments when running.

In an exemplary embodiment, the above non-volatile computer-readable storage medium may include, but is not limited to: a USB flash disk, a read-only memory (ROM), a random access memory (RAM), a mobile hard disk drive, a magnetic disk, an optical disk, or other media that may store a computer program.

An embodiment of the present disclosure further provides an electronic device, including a memory and a processor. A computer program is stored in the memory, and the processor is configured to run the computer program, so that the operations in any of the above method embodiments are performed.

In an exemplary embodiment, the electronic device may further include a transmission device and an I/O device, where the transmission device is connected to the above processor, and the I/O device is connected to the processor.

An embodiment of the present disclosure further provides a computer program product, where the computer program product includes a computer program, and the computer program is executed by a processor to implement the operations of any of the above method embodiments.

An embodiment of the present disclosure further provides another computer program product, including a non-volatile computer-readable storage medium, where the non-volatile computer-readable storage medium stores a computer program, and the computer program is executed by a processor to implement the operations of any of the above method embodiments.

An embodiment of the present disclosure further provides a computer program, where the computer program includes computer instructions, and the computer instructions are stored in a non-volatile computer-readable storage medium; a processor of a computer device reads the computer instructions from the non-volatile computer-readable storage medium and executes the computer instructions, so that the computer device executes the operations of any of the above method embodiments.

Refer to examples described in the above embodiments and exemplary embodiments for some examples in this embodiment, which are not repeated herein.

Obviously, those skilled in the art should understand that the above modules or operations in the present disclosure may be implemented by a general-purpose computing apparatus, may be concentrated on a single computing apparatus, or distributed over a network including a plurality of computing apparatuses, may be implemented by program code executable by the computing apparatuses, and thus may be stored in a storage apparatus and executed by the computing apparatuses. In some cases, the operations shown or described may be executed in an order different from the operations described herein, or the modules may be made as individual integrated circuit modules, or a plurality of the modules or operations may be made as a single integrated circuit module for implementation. In this way, the present disclosure is not limited to any particular combination of hardware and software.

The above descriptions are merely optional embodiments of the present disclosure and are not intended to limit the present disclosure. For those skilled in the art, the present disclosure may be subject to various modifications and changes. Any modifications, equivalent substitutions, improvements, and the like made within the principles of the present disclosure should be included within the scope of protection of the present disclosure.

**Claims**

1. A method for adjusting power interruption hold up time, wherein the method is applied to a microprocessor, a plurality of pairs of pins are configured on the microprocessor, and different pairs of pins are connected to detection circuits configured to perform different detection functions; and the method comprises:

   in a case where it is determined that the power interruption hold up time of a server Power Supply Unit (PSU) needs to be adjusted, acquiring input power consumption of the server PSU and a voltage difference between output voltages of a power supply power factor correction (PFC) stage circuit, wherein the input power consumption is detected by a first detection circuit, and the voltage difference is detected by a second detection circuit;
   determining, according to the input power consumption and the voltage difference, a correspondence between the power interruption hold up time of the server PSU and an output capacitance of the power supply PFC stage circuit; and
   adjusting, according to the correspondence, the output capacitance to adjust the power interruption hold up time of the server PSU to first power interruption hold up time.

2. The method according to claim 1, wherein acquiring the input power consumption of the server PSU detected by a first detection circuit comprises:

   acquiring output power consumption of the server PSU, an output percentage of the server PSU, and power conversion efficiency of the server PSU, wherein the output power consumption, the output percentage, and the power conversion efficiency are all detected by the first detection circuit; and
   determining the input power consumption according to the output power consumption, the output percentage, and the power conversion efficiency.

3. The method according to claim 2, wherein determining the input power consumption according to the output power consumption, the output percentage, and the power conversion efficiency comprises:

determining the input power consumption Pin according to the following formula (1):

$$Pin = Pout \times Load / \eta \quad \text{Formula (1)},$$

wherein Pout is the output power consumption, Load is the output percentage, and $\eta$ is the power conversion efficiency.

4. The method according to claim 1, wherein acquiring the voltage difference between output voltages of the power supply PFC stage circuit detected by the second detection circuit comprises:

acquiring a maximum voltage value output by the power supply PFC stage circuit, which is detected by the second detection circuit, and a minimum voltage value for maintaining the output of the server PSU; and
determining a difference between the maximum voltage value and the minimum voltage value as the voltage difference.

5. The method according to claim 1 or 4, wherein determining, according to the input power consumption and the voltage difference, the correspondence between the power interruption hold up time of the server PSU and the output capacitance of the power supply PFC stage circuit comprises:
determining, according to the following formula (2), the correspondence between the power interruption hold up time T_holdup of the server PSU and the output capacitance C_bulk:

$$T\_holdup = C\_bulk \times \Delta V^2 / (2 \times Pin) \quad \text{Formula (2)},$$

wherein $\Delta V$ is the voltage difference, and Pin is the input power consumption.

6. The method according to claim 5, wherein in a case where it is determined that the power interruption hold up time of the server PSU needs to be adjusted, the method further comprises:

determining a correspondence between the power interruption hold up time of the server PSU and the output voltage of the power supply PFC stage circuit; and
adjusting, according to the correspondence between the power interruption hold up time of the server PSU and the output voltage of the power supply PFC stage circuit, the output voltage of the power supply PFC stage circuit to adjust the power interruption hold up time of the server PSU to a second power interruption hold up time.

7. The method according to claim 6, wherein determining the correspondence between the power interruption hold up time of the server PSU and the output voltage of the power supply PFC stage circuit comprises:
determining, according to the formula (2), the following formula (3), wherein the formula (3) is used to indicate the correspondence between the power interruption hold up time T_holdup of the server PSU and the output voltage Pout of the power supply PFC stage circuit:

$$T\_holdup = C\_bulk \times (1 - C\_error) \times (Vbulk\_high^2 - Vbulk\_low^2) \times \eta / (2 \times Pout \times Load)$$

$$\text{Formula (3)},$$

wherein C_error is an error value of the output capacitance, Vbulk_high is the maximum voltage value output by the power supply PFC stage circuit, and Vbulk_low is the minimum voltage value for maintaining the output of the server PSU.

8. The method according to claim 6, wherein adjusting, according to the correspondence, the output voltage of the power supply PFC stage circuit to adjust the power interruption hold up time of the server PSU to the second power interruption hold up time comprises:

determining a target output voltage, wherein in a case where the output voltage of the power supply PFC stage circuit is the target output voltage, the power interruption hold up time of the server PSU maintains at the second power interruption hold up time; and
adjusting a duty cycle according to a current input voltage of the power supply PFC stage circuit and a correspondence between the input voltage of the power supply PFC stage circuit and the output voltage of the power supply PFC stage circuit, so as to adjust the output voltage of the power supply PFC stage circuit to the target output voltage.

9. The method according to claim 8, wherein before adjusting the duty cycle, the method further comprises: determining, according to the following formula (4), the correspondence between the input voltage Vin of the power supply PFC stage circuit and the output voltage Vout of the power supply PFC stage circuit:

$$Vout = Vin/(1-D) \qquad Formula\ (4),$$

wherein D is the duty cycle.

10. The method according to claim 8, wherein before adjusting the duty cycle, the method further comprises: acquiring the current input voltage of the power supply PFC stage circuit detected by a third detection circuit.

11. The method according to claim 10, wherein the third detection circuit comprises a first resistor and a second resistor, wherein a first terminal of the first resistor is connected to an input voltage detection terminal of the power supply PFC stage circuit, a second terminal of the first resistor is connected to a target pin of the microprocessor and a first terminal of the second resistor, and a second terminal of the second resistor is grounded.

12. The method according to claim 11, wherein the first resistor comprises a first sub-resistor and a second sub-resistor, wherein the first sub-resistor and the second sub-resistor each have a resistance value of 499 KΩ, and the second resistor has a resistance value of 5.57 KΩ.

13. The method according to claim 1, wherein the adjusting, according to the correspondence, the output capacitance comprises: selecting, according to the correspondence, a capacitor branch to be connected from a plurality of pre-configured capacitor connection branches to adjust the output capacitance.

14. The method according to claim 1, wherein adjusting, according to the correspondence, the output capacitance comprises: adjusting, according to the correspondence, a voltage across two ends of the capacitor comprised in the power supply PFC stage circuit to adjust the input capacitance.

15. The method according to claim 2, wherein the output power consumption of the server PSU is determined in the following manner: determining the output power consumption according to a sum of products of all Direct Current (DC) output voltages and currents provided by the server PSU.

16. An apparatus for adjusting power interruption hold up time, wherein the apparatus is applied to a microprocessor, a plurality of pairs of pins are configured on the microprocessor, and different pin pairs are connected to detection circuits configured to perform different detection functions; and the apparatus comprises:

a first acquisition module, configured to, in a case where it is determined that the power interruption hold up time of a server PSU needs to be adjusted, acquire input power consumption of the server PSU and a voltage difference between output voltages of a power supply PFC stage circuit, wherein the input power consumption is detected by a first detection circuit, and the voltage difference is detected by a second detection circuit;
a first determining module, configured to determine, according to the input power consumption and the voltage difference, a correspondence between the power interruption hold up time of the server PSU and an output capacitance of the power supply PFC stage circuit; and
a first adjustment module, configured to adjust, according to the correspondence, the output capacitance to adjust the power interruption hold up time of the server PSU to first power interruption hold up time.

17. A microprocessor, comprising the apparatus for adjusting power interruption hold up time according to claim 16.

18. A non-volatile computer-readable storage medium, wherein

    the non-volatile computer-readable storage medium stores a computer program, wherein when the computer program is executed by a processor, the operations of the method according to any one of claims 1 to 15 are implemented.

19. An electronic device, comprising a memory, a processor, and a computer program stored on the memory and executable on the processor, wherein

    when the processor executes the computer program, the operations of the method according to any one of claims 1 to 15 are implemented.

20. A computer program product, comprising a computer program, wherein

    when the computer program is executed by a processor, the operations of the method according to any one of claims 1 to 15 are implemented.

Fig. 1

Fig. 2

Input/output device
**308**

Transmission device
**306**

Processor
**302**

Memory
**304**

Fig. 3

In a case where it is determined that the power interruption hold up time of a server PSU needs to be adjusted, acquiringacquire input power consumption of the server PSU detected by a first detection circuit and a voltage difference between output voltages of a power supply power factor correction (PFC) stage circuit, wherein the input power consumption is detected by a first detection circuit, and the voltage difference is detected by a second detection circuit — S402

DeterminingDetermine, according to the input power consumption and the voltage difference, a correspondence between the power interruption hold up time of the server PSU and an output capacitance of the power supply PFC stage circuit — S404

AdjustingAdjust, according to the correspondence, the output capacitance based on the correspondence to adjust the power interruption hold up time of the server PSU to first power interruption hold up time — S406

Fig. 4

Fig. 5

Fig. 6

Fig. 7

Fig. 8

```
┌─────────────────────────────────────────┐
│                                         │  ⌒ S902
│     PFC output voltage detection        │
│                                         │
└─────────────────────────────────────────┘
                    │
                    ▼
              ⟋        ⟍        ⌒ S904
                                            NO
   Determine whether at least one of the following conditions is met

   (1) Input voltage is 0, Vin = 0, lasting 0.5 to 30 AC cycles.

   (2) Input voltage drops by 90%, lasting 0 to 0.5 AC cycles.

   (3) Input voltage drops by 30%, lasting 1 to 3,000 AC cycles.

              ⟍        ⟋
                    │
                   YES
                    │
                    ▼
┌─────────────────────────────────────────┐
│                                         │  ⌒ S906
│          PFC load adjustment            │
│                                         │
└─────────────────────────────────────────┘
                    │
                    ▼
┌─────────────────────────────────────────┐
│                                         │  ⌒ S908
│      PFC output voltage adjustment      │
│                                         │
└─────────────────────────────────────────┘
```

Fig. 9

VOUT

R1

R2

VFB

M1

R3

GND

Fig. 10

First acquisition module — 112

First determining module — 114

First adjustment module — 116

Fig. 11

# EP 4 782 965 A1

## INTERNATIONAL SEARCH REPORT

International application No.

**PCT/CN2025/118542**

### A. CLASSIFICATION OF SUBJECT MATTER

G06F1/3203(2019.01)i; G06F1/26(2006.01)i

According to International Patent Classification (IPC) or to both national classification and IPC

### B. FIELDS SEARCHED

Minimum documentation searched (classification system followed by classification symbols)

IPC: G06F

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; IEEE; 读秀, DUXIU: 服务器, 中断, 断电, 电压骤降, 掉电, 维持时间, 保持时间, 功率因数校正, 不断电系统, server, outage, voltage sag, hold up time, power factor correction, PFC, Uninterruptible Power Supply, UPS

### C. DOCUMENTS CONSIDERED TO BE RELEVANT

| Category* | Citation of document, with indication, where appropriate, of the relevant passages | Relevant to claim No. |
|---|---|---|
| PX | CN 119045639 A (SUZHOU YUANNAO INTELLIGENT TECHNOLOGY CO., LTD.) 29 November 2024 (2024-11-29) claims 1-17, description, paragraphs [0002]-[0174], and figures 1-11 | 1-20 |
| X | CN 116154930 A (SUZHOU INSPUR INTELLIGENT TECHNOLOGY CO., LTD.) 23 May 2023 (2023-05-23) description, paragraphs [0024]-[0093], and figures 1-8 | 1-7, 13-20 |
| A | CN 116154930 A (SUZHOU INSPUR INTELLIGENT TECHNOLOGY CO., LTD.) 23 May 2023 (2023-05-23) description, paragraphs [0024]-[0093], and figures 1-8 | 8-12 |
| A | CN 115509338 A (SUZHOU INSPUR INTELLIGENT TECHNOLOGY CO., LTD.) 23 December 2022 (2022-12-23) entire document | 1-20 |
| A | CN 113448419 A (SHANDONG YINGXIN COMPUTER TECHNOLOGY CO., LTD.) 28 September 2021 (2021-09-28) entire document | 1-20 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **18 September 2025** | **22 September 2025** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

24

**INTERNATIONAL SEARCH REPORT**

| International application No. |
| --- |
| **PCT/CN2025/118542** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 2020097060 A1 (FACEBOOK, INC.) 26 March 2020 (2020-03-26)<br>entire document | 1-20 |

Form PCT/ISA/210 (second sheet) (July 2022)

**INTERNATIONAL SEARCH REPORT**
**Information on patent family members**

International application No.

**PCT/CN2025/118542**

| Patent document cited in search report | | | Publication date (day/month/year) | Patent family member(s) | | | Publication date (day/month/year) |
|---|---|---|---|---|---|---|---|
| CN | 119045639 | A | 29 November 2024 | CN | 119045639 | B | 25 February 2025 |
| CN | 116154930 | A | 23 May 2023 | None | | | |
| CN | 115509338 | A | 23 December 2022 | CN | 115509338 | B | 27 June 2025 |
| CN | 113448419 | A | 28 September 2021 | CN | 113448419 | B | 28 February 2023 |
| US | 2020097060 | A1 | 26 March 2020 | US | 10852803 | B2 | 01 December 2020 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202411530391